(19) Europäisches Patentamt
European Patent Office
Office européen des brevets

(11) Veröffentlichungsnummer : **0 527 164 B1**

# (12) EUROPÄISCHE PATENTSCHRIFT

(45) Veröffentlichungstag der Patentschrift : **30.03.94 Patentblatt 94/13**

(51) Int. Cl.$^5$ : **C09B 62/51,** D06P 1/384

(21) Anmeldenummer : **91908267.7**

(22) Anmeldetag : **24.04.91**

(86) Internationale Anmeldenummer : **PCT/EP91/00788**

(87) Internationale Veröffentlichungsnummer : **WO 91/17216 14.11.91 Gazette 91/26**

## (54) WASSERLÖSLICHE MONOAZOVERBINDUNGEN, VERFAHREN ZU IHRER HERSTELLUNG UND IHRE VERWENDUNG ALS FARBSTOFFE.

Die Akte enthält technische Angaben, die nach dem Eingang der Anmeldung eingereicht wurden und die nicht in dieser Patentschrift enthalten sind.

(30) Priorität : **28.04.90 DE 4013688**

(43) Veröffentlichungstag der Anmeldung : **17.02.93 Patentblatt 93/07**

(45) Bekanntmachung des Hinweises auf die Patenterteilung : **30.03.94 Patentblatt 94/13**

(84) Benannte Vertragsstaaten : **BE CH DE ES FR GB IT LI NL**

(56) Entgegenhaltungen :
**EP-A- 0 174 909**
**EP-A- 0 265 857**
**EP-A- 0 284 568**

(73) Patentinhaber : **HOECHST AKTIENGESELLSCHAFT**
**D-65926 Frankfurt (DE)**

(72) Erfinder : **SPRINGER, Hartmut**
**Am Erdbeerstein 27**
**D-6240 Königstein (DE)**
Erfinder : **GLEISSNER, Rolf**
**Geisenheimerstrasse 88**
**D-6000 Frankfurt 71 (DE)**
Erfinder : **MEIER, Michael**
**Franz-Rücker-Allee 13**
**W-6000 Frankfurt/Main 90 (DE)**

**EP 0 527 164 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem technischen Gebiet der faserreaktiven Farbstoffe.

Faserreaktive Azoverbindungen mit Harnstoffgruppen, die Cellulosefasermaterialien in gelben bis blauroten Tönen zu färben vermögen, sind beispielsweise aus den US-Patentschriften Nrs. 3 419 542 und 3 518 245 und aus den europäischen Patentanmeldungs-Veröffentlichungen Nrs. 0 174 909A und 0 265 857A bekannt. Gestiegene Anforderungen an die Qualität der Färbungen und an die Wirtschaftlichkeit des Färbeprozesses haben es jedoch erforderlich gemacht, verbesserte Farbstoffe zu entwickeln. Denn gerade zum Färben von Cellulosefasermaterialien, wie Baumwolle, nach den Klotz-Kaltverweil-Verfahren werden Farbstoffe benötigt, die gut löslich sind und die bei den niedrigen Färbe- und -Fixiertemperaturen eine hohe Reaktivität aufweisen. Sie sollen einen hohen Fixiergrad besitzen, um sowohl ökonomisch als auch ökologisch mit hohem Vorteil in die Färbeprozesse eingesetzt werden zu können. Darüber hinaus sollen die Farbstoffe Färbungen mit guten Echtheitseigenschaften, wie beispielsweise mit guten Naßechtheiten und Lichtechtheiten, liefern.

Mit der nachstehend beschriebenen Erfindung wurde diese Aufgabe gelöst.

Gegenstand der Erfindung sind wasserlösliche Monoazoverbindungen entsprechend der allgemeinen Formel (1)

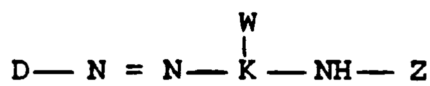

(1)

in welcher bedeuten:

D ist Phenyl, das durch eine Gruppe der allgemeinen Formel $y^1$-$SO_2$- mit $Y^1$ der nachstehend angegebenen Bedeutung substituiert ist und durch 1 oder 2 Substituenten substituiert sein kann, die aus der Gruppe: 2 Alkyl von 1 bis 4 C-Atomen, wie Ethyl und insbesondere Methyl, 2 Alkoxy von 1 bis 4 C-Atomen, wie Ethoxy und insbesondere Methoxy, 1 Carboxy, 1 Sulfo, 1 Hydroxy, 1 Chlor und 1 Brom ausgewählt sind, oder ist ein Naphthyl, bevorzugt Naphth-2-yl, das durch 1 oder 2 Gruppen der allgemeinen Formel $Y^1$-$SO_2$- mit $Y^1$ der nachstehend angegebenen Bedeutung substituiert ist und durch 1 oder 2 Sulfogruppen substituiert sein kann;

$Y^1$ ist Vinyl oder ist Ethyl, das in β-Stellung einen Substituenten enthält, der durch Alkali unter Bildung der Vinylgruppe eliminierbar ist;

W ist Amino oder Hydroxy,

-K(-W)- ist der bivalente Rest einer hydroxy- oder aminogruppenhaltigen Kupplungskomponente der Benzol- oder Naphthalinreihe, beispielsweise der Rest eines gegebenenfalls substituierten, vorzugsweise durch 1 oder 2 Sulfogruppen substituierten, Aminonaphthols oder Anilins;

Z ist eine Gruppe der allgemeinen Formel

$$-CO-NH-(CH_2)_3-SO_2-Y$$

in welcher

Y eine der für $Y^1$ angebenen Bedeutungen hat und mit $Y^1$ identisch oder von $Y^1$ verschieden sein kann.

Bevorzugt ist D ein Rest der allgemeinen Formel (2a) oder (2b)

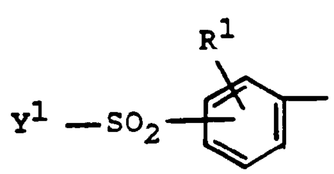

(2a)

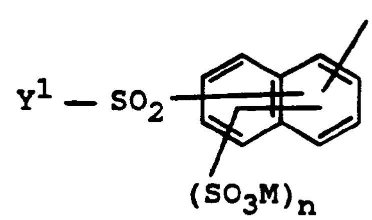

(2b)

in welchen

$Y^1$ eine der oben angegebenen Bedeutungen besitzt,

$R^1$ Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Hydroxy oder Sulfo ist,

M Wasserstoff oder ein Alkalimetall, wie Natrium, Kalium und Lithium, ist und

n die Zahl Null, 1 oder 2 bedeutet (wobei im Fall von n gleich Null diese Gruppe Wasserstoff bedeutet).

Bevorzugt ist in Formel (1) der Rest -K(- W)-NH-Z ein Rest der allgemeinen Formel (3a), (3b) oder (3c)

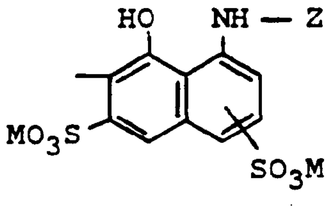

(3a)

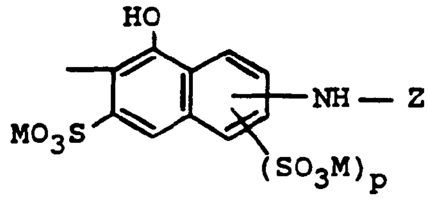

(3b)

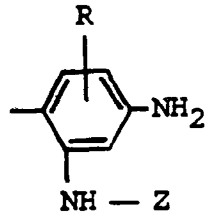

(3c)

in welchen

M und Z eine der oben angegebenen Bedeutungen besitzen, die eine Gruppe $-SO_3M$ in Formel (3a) in meta- oder para-Stellung zur Gruppe -NH-Z steht, die Gruppe -NH-Z in Formel (3b) in 2-, 3- oder 4-Stellung, bevorzugt in 2- oder 3-Stellung, des 8-Naphthol-Restes steht,

p die Zahl Null oder 1 ist (wobei im Fall von p gleich Null diese Gruppe Wasserstoff bedeutet),

R Wasserstoff, Sulfo, Alkyl von 1 bis 4 C-Atomen, wie Ethyl und Methyl, Alkoxy von 1 bis 4 C-Atomen, wie Ethoxy und Methoxy, oder Carboxy, bevorzugt Alkyl von 1 bis 4 C-Atomen oder Sulfo, ist, wobei der Substituent R bevorzugt in para-Stellung zur Gruppe -NH-Z an den Benzolkern gebunden ist.

Bevorzugt ist $R^1$ Methyl, Ethyl oder Ethoxy und insbesondere bevorzugt Wasserstoff. Die Gruppe $y^1-SO_2-$ in Formel (2a) steht bevorzugt in meta- und insbesondere bevorzugt in para-Stellung zur mit der Azogruppe verbundenen freien Bindung. In Formel (2b) steht die freie Bindung zur Azogruppe bevorzugt in β-Stellung des Naphthalinrestes.

Der Formelrest D ist bevorzugt 4-(ß-Sulfatoethylsulfonyl)-phenyl, 3-(ß-Sulfatoethylsulfonyl)-phenyl, 2-Methoxy-5-(ß-sulfatoethylsulfonyl)-phenyl, 1-Sulfo-6-(β-sulfatoethylsulfonyl)-naphth-2-yl, 6-(β-Sulfatoethylsulfonyl)-naphth-2-yl und 8-(β-Sulfatoethylsulfonyl)-naphth-2-yl.

Bevorzugte Kupplungskomponentenreste der allgemeinen Formeln (3) sind insbesondere solche der allgemeinen Formel (3a), in welcher die eine Gruppe $-SO_3M$ in meta-Stellung zur Gruppe -NH-Z gebunden ist, und solche der allgemeinen Formel (3b), in welcher p für die Zahl Null steht und die Gruppe -NH-Z in 2-Stellung an den 8-Naphthol-Rest gebunden ist, und solche der allgemeinen Formel (3c), in welcher R Sulfo bedeutet und in para-Stellung zur Gruppe -NH-Z an den Benzolkern gebunden ist.

Alkalisch eliminierbare, in ß-Stellung der Ethylgruppe der Formelglieder $Y^1$ und Y stehende Substituenten sind beispielsweise Alkanoyloxygruppen von 2 bis 5 C-Atomen, wie die Acetyloxygruppe, Aroyloxygruppen, wie die Benzoyloxy-, Sulfobenzoyloxy- oder Carboxybenzoyloxy-Gruppe, die Alkylaminogruppen mit Alkylresten von 1 bis 4 C-Atomen, wie insbesondere die Dimethylamino- und Diethylaminogruppe, Trialkylammoniumgruppen mit Alkylresten mit 1 bis 4 C-Atomen, wie die Trimethylammoniumgruppe, das Chloratom, das Bromatom, Alkylsulfonyloxygruppen von 1 bis 4 C-Atomen, wie die Methylsulfonyloxygruppe, und insbesondere eine Thiosulfato- und Sulfatogruppe. Bevorzugt sind Y und $Y^1$ unabhängig voneinander die Vinylgruppe, die ß-Chlorethyl-, ß-Thiosulfatoethyl- und die ß-Sulfatoethyl-Gruppe.

Insbesondere ist $Y^1$ bevorzugt die ß-Sulfatoethyl-Gruppe und Y die ß-Chlorethyl-, ß-Sulfatoethyl- oder ß-Thiosulfatoethyl-Gruppe.

Die einzelnen Formelglieder der obigen Formeln können zueinander gleiche oder voneinander verschiedene Bedeutungen besitzen.

Die Substituenten "Sulfo", "Carboxy", "Thiosulfato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM, Thiosulfatogruppen Gruppen entsprechend der allgemeinen Formel $-S-SO_3M$ und Sulfatogruppen Gruppen entsprechend der allgemeinen Formel $-OSO_3M$ , jeweils mit M der obengenannten Bedeutung.

Die vorliegende Erfindung betrifft weiterhin ein Verfahren zur Herstellung der Monoazoverbindungen der allgemeinen Formel (1), das dadurch gekennzeichnet ist, daß man das Diazoniumsalz eines aromatischen Amins der allgemeinen Formel $D-NH_2$ mit D der obengenannten Bedeutung analog bekannten Verfahrensweisen mit einer Verbindung der allgemeinen Formel (4)

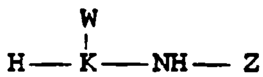

(4)

in welcher K, W und Z die obengenannten Bedeutungen haben, kuppelt.

Die Diazotierung des Amins der allgemeinen Formel D-$NH_2$ zum Diazoniumsalz erfolgt in an und für sich bekannter Weise, so beispielsweise in wäßrigem Medium mittels salpetriger Säure (wie mittels Natriumnitrit in wäßrigmineralsaurer, wie salz- oder schwefelsaurer, Lösung) bei einer Temperatur zwischen -5°C und +15°C. Die erfindungsgemäße Kupplungsreaktion dieses Diazoniumsalzes mit der Kupplungskomponente der Formel (4) erfolgt ebenfalls analog bekannter Verfährensweisen von Kupplungsreaktionen mit Naphthol- oder Anilinverbindungen, so in wäßrigem Medium bei einer Temperatur zwischen 5 und 40°C, bevorzugt zwischen 10 und 25°C, und bei einem pH-Wert zwischen 3,5 und 7,5, bevorzugt zwischen 4 und 7, sofern die Kupplungskomponente eine naphtholische Kupplungskomponente ist, und bei einem pH-Wert zwischen 0,5 und 3, bevorzugt zwischen 1 und 2,5, sofern die Kupplungskomponente eine aminogruppenhaltige Kupplungskomponente ist.

Die Ausgangsverbindungen der allgemeinen Formel D-$NH_2$ sind in der Literatur bekannt und zahlreich in Patentschriften, faserreaktive Farbstoffe betreffend, beschrieben. Die Ausgangsverbindungen der allgemeinen Formel (4) lassen sich gemäß bekannten Verfahrensweisen, wie sie für die Umsetzung von aromatischen Aminoverbindungen mit Isocyanaten beschrieben sind (s. Houben-Weyl, Methoden der Organischen Chemie, Band 8 (1952), Seiten 149-163, G. Thieme-Verlag, Stuttgart, und dessen 4. Ergänzungswerk (1983), Seiten 334-342 und 352-357), darstellen. Insbesondere erfolgt deren Synthese in der Weise, daß man eine Lösung des Isocyanats der allgemeinen Formel (5)

$$OCN - (CH_2)_3 - SO_2 - Y \qquad (5)$$

in welcher Y die obengenannte Bedeutung hat und bevorzugt ß-Chlorethyl ist, in einem organischen Lösemittel, bevorzugt Chlorbenzol, mit einer wäßrigen Lösung der Verbindung der allgemeinen Formel H-K(-W)-$NH_2$ mit K und W der obengenannten Bedeutung unter Einhaltung eines pH-Wertes zwischen 2 und 9, bevorzugt zwischen 2 und 8, und einer Temperatur zwischen 0 und 70°C, bevorzugt zwischen 15 und 30°C, miteinander verrührt oder auf eine andere, übliche Art zur Reaktion zusammenbringt.

Zur Herstellung der erfindungsgemäßen Ausgangsverbindungen der allgemeinen Formel (4) dienen die in der Farbenchemie bekannten Kupplungskomponenten der Benzol- und Naphthalinreihe, die mindestens eine Aminogruppe enthalten, insbesondere die Verbindungen der allgemeinen Formeln (6a), (6b) und (6c)

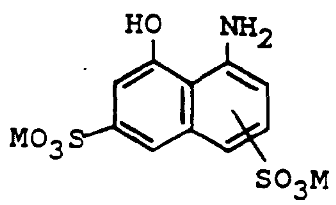

(6a)

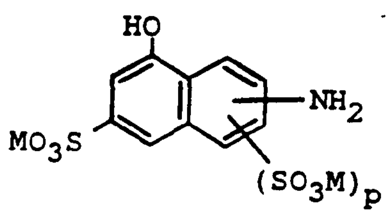

(6b)

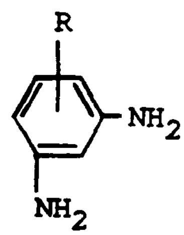

(6c)

in welchen die einzelnen Formelglieder die für die Formeln (3a), (3b) und (3c) genannten, insbesondere bevorzugten, Bedeutungen haben. Insbesondere bevorzugte aminogruppenhaltigen Kupplungskomponenten der allgemeinen Formel H-K(-W)-$NH_2$ sind 4-Sulfo-1,3-diamino-benzol, 1-Amino-3,6-disulfo-8-naphthol und 2-Amino-3-sulfo-8-naphthol.

Die Ausgangsverbindungen der allgemeinen Formel (5) erhält man durch Umsetzung eines Amins der allgemeinen Formel $H_2N-(CH_2)_3-SO_2-Y$ mit Y der obigen Bedeutung, wie beispielsweise $\gamma$-($\beta$'-Chlorethylsulfonyl)-propylamin, das aus der Deutschen Offenlegungsschrift Nr. 2 040 620 bekannt ist, mit Phosgen in üblicher Verfahrensweise.

Sowohl die erfindungsgemäßen Monoazoverbindungen der allgemeinen Formel (1) als auch die erfindungsgemäß verwendeten Ausgangsverbindungen der allgemeinen Formel H-K(-W)-NH-Z können bezüglich ihrer faserreaktiven Reste -$SO_2$-Y bzw. -$SO_2$-$Y^1$ analog bekannten Verfahrensweisen in Verbindungen mit ansonsten gleicher Konstitution, jedoch mit einer Gruppierung, in welchen Y bzw. $Y^1$ eine andere Gruppe darstellt, übergeführt werden, so beispielsweise ausgehend von den Verbindungen mit einer ß-Sulfatoethylsulfonyl- oder ß-Chlorethylsulfonyl-Gruppe in solche, in welchen Y und $Y^1$ die Vinylgruppe bedeuten, und ausgehend von Verbindungen mit der ß-Chlorethylsulfonyl- oder der Vinylsulfonyl-Gruppe in solche, in welchen Y und $Y^1$

die ß-Thiosulfatoethylsulfonyl-Gruppe bedeuten. So lassen sich beispielsweise die Vinylsulfonyl-Verbindungen aus ihren entsprechenden ß-Chlorethylsulfonyl-Verbindungen oder ihren Verbindungen, in welchen Y oder $Y^1$ die Ethylgruppe ist, die in ß-Stellung die Estergruppe einer organischen oder anorganischen Säure als Substituenten enthält, wie beispielsweise die Sulfato- oder die Acetyloxygruppe, in der Weise herstellen, daß man ein Alkali in wäßrigem Medium bei einem pH-Wert zwischen 10 und 12 und bei einer Temperatur zwischen 20 und 50°C, abhängig von der Temperatur, während 10 Minuten bis 2 Stunden auf diese Verbindungen einwirken läßt, so bspw. bei einer Temperatur von 50°C während 10 bis 20 Minuten oder bei einer Temperatur von 25°C während zwei bis drei Stunden, und aus der ß-Chlorethylsulfonyl-Verbindung oder der Vinylsulfonyl-Verbindung läßt sich bei einem pH-Wert zwischen 4 und 9 und einer Temperatur zwischen 20 und 60°C durch Umsetzung mit Natriumthiosulfat die entsprechende ß-Thiosulfatoethylsulfonyl-Verbindung herstellen.

Die Abscheidung und Isolierung der erfindungsgemäß hergestellten Monoazoverbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei der Syntheselösung eine Puffersubstanz zugefügt werden kann.

Die erfindungsgemäßen Monoazoverbindungen der allgemeinen Formel (1) - im nachfolgenden Verbindungen (1) genannt - haben faserreaktive Eigenschaften und besitzen sehr gute Farbstoffeigenschaften. Sie können deshalb zum Färben (einschließlich Bedrucken) von hydroxygruppenhaltigen und/oder carbonamidgruppenhaltigen Fasermaterialien verwendet werden. Auch können die bei der Synthese der Verbindungen (1) anfallenden Lösungen, gegebenenfalls nach Zusatz einer Puffersubstanz und gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemäßen Verbindungen (1) zum Färben (einschließlich Bedrucken) von hydroxy- und/oder carbonamidgruppenhaltigen Fasermaterialien bzw. Verfahren zu deren Anwendung auf diesen Substraten. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane in Form von Fasern, beispielsweise Wolle und andere Tierhaare, Seide, Leder, Polyamid-6,6, Polyamid-6, Polyamid-11 und Polyamid-4.

Die Verbindungen (1) lassen sich, gemäß der erfindungsgemäßen Anwendung, auf den genannten Substraten nach den für wasserlösliche Farbstoffe, insbesondere faserreaktive Farbstoffe, bekannten Anwendungstechniken applizieren und fixieren, so beispielsweise, indem man die Verbindung (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert. Solche Färbe- und Fixierweisen sind sowohl in der Fachliteratur als auch in der Patentliteratur zahlreich beschrieben, wie beispielsweise in der Europäischen Patentanmeldungs-Veröffentlichung Nr. 0 181 585A. Wegen ihrer guten Wasserlöslichkeit eignen sie sich auch besonders für das Klotz-Kaltverweil-Verfahren.

Mit den Verbindungen (1) werden sowohl auf carbonamidgruppenhaltigen Materialien, wie insbesondere auf Wolle, als auch auf hydroxygruppenhaltigem Material, wie insbesondere Cellulosefasermaterial, gelbe bis blaustichig rote Färbungen und Drucke mit guten Echtheitseigenschaften, wie guten Plissier-, Bügel- und Reibechtheiten und insbesondere einer guten Lichtechtheit und guten Naßechtheitseigenschaften, von denen insbesondere die Schweißechtheiten hervorgehoben werden können.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden. Die im sichtbaren Bereich angegebenen Absorptionsmaxima ($\lambda_{max}$-Werte) wurden aus wäßriger Lösung der Alkalimetallsalze bestimmt.

**Beispiel A**

In eine auf 100°C erwärmte Suspension von 111 Teilen γ-(β'-Chlorethylsulfonyl)-propylamin-hydrochlorid in 500 Volumenteilen Chlorbenzol werden innerhalb von 6 bis 8 Stunden 125 Teile Phosgen eingeleitet. Man rührt den Ansatz noch zwei Stunden nach und entfernt sodann überschüssiges Phosgen durch Ausblasen mit Stickstoff. Man erhält eine schwach gelbliche Lösung des γ-(β'-Chlorethylsulfonyl)-propyl-isocyanats, die direkt als Ausgangsverbindung für die Synthese der erfindungsgemäßen Azoverbindungen eingesetzt werden kann.

Das γ-(β'-Chlorethylsulfonyl)-propylisocyanat ist bisher in der Literatur noch nicht beschrieben. Es besitzt im IR-Spektrum eine NCO-Bande bei 2282 $cm^{-1}$, Zur Charakterisierung kann ein kleiner Teil der Isocyanatlösung mit Anilin verrührt werden. Es scheidet sich nach kurzer Zeit der N-[γ-(β'-Chlorethylsulfonyl)-propyl]-N'-phenylharnstoff ab, der nach Umkristallisation aus Ethanol einen Schmelzpunkt von 140 bis 142°C besitzt.

Die Elementaranalyse ergab folgende Werte:

ber.: C 47,3 %, H 5,6 %, N 9,2 %, S 10,5 %,
gef.: C 47,6 %, H 5,7 %, N 9,3 %, S 9,8 %.

Die Struktur wurde zudem durch NMR-Spektroskopie bestätigt.

**Beispiel B**

Zur Herstellung einer erfindungsgemäß verwendeten Kupplungskomponente versetzt man bei einem pH-Wert von 4,5 und einer Temperatur von 20 bis 25°C 220 Teile einer wäßrigen Lösung von 19 Teilen 4-Sulfo-1,3-diaminobenzol unter kräftigem Rühren mit einem Viertel der in Beispiel A hergestellten Isocyanatlösung. Nach einer Reaktionszeit von vier bis fünf Stunden ist die Umsetzung beendet. Man trennt organische Phase ab. Die wäßrige Phase mit der Verbindung der Formel

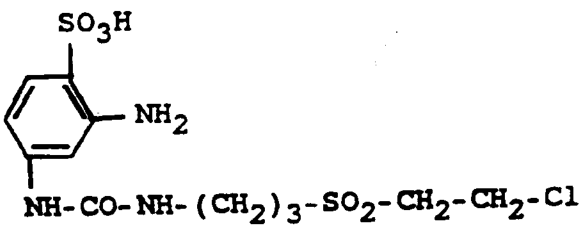

kann direkt zur Synthese der erfindungsgemäßen Monoazoverbindungen eingesetzt werden.

Zur Charakterisierung dieser Anilin-Ausgangsverbindung wird ein kleiner Teil der wäßrigen Phase auf einen pH-Wert von 1,5 gestellt und mehrere Stunden gerührt. Die ausgefallene Verbindung wird isoliert. Sie hat die Struktur N-[γ-(β'-Chlorethylsulfonyl)-propyl]-N'-(3-amino-4-sulfo-phenyl)-harnstoff, was durch $^1H$-NMR-Spektroskopie und durch die Elementaranalyse bestätigt wurde.

Elementaranalyse:

ber.: C 36,0 %, H 4,5 %, N 10,5 %, Cl 8,9 %,
gef.: C 35,9 %, H 4,6 %, N 10,1 %, Cl 9,2 %.

**Beispiel C**

32 Teile 1-Amino-3,6-disulfo-8-naphthol werden in 200 Teilen Wasser suspendiert. Mit einer wäßrigen 1-n-Lithiumhydroxid-Lösung wird ein pH-Wert zwischen 4,5 und 5 eingestellt. Zu diesem Reaktionsgemisch gibt man bei 20 bis 25°C und heftigem Rühren ein Viertel der isocyanatlösung von Beispiel A. Die Reaktion ist nach etwa vier bis acht Stunden beendet (sie kann dünnschichtchromatographisch verfolgt werden). Die organische Phase wird abgetrennt. Die wäßrige Phase enthält etwa 50 Teile der Verbindung der Formel

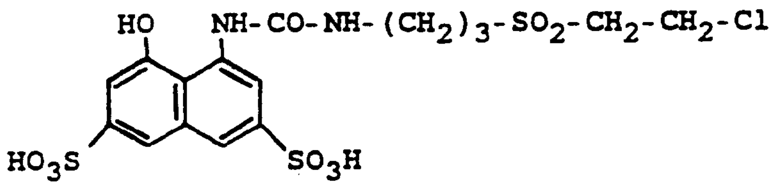

.

**Beispiel D**

Zur Herstellung einer erfindungsgemäß verwendbaren Kupplungskomponente verfährt man gemäß der Verfahrensweise des Beispiels C, setzt jedoch anstelle der dort angegebenen Aminonaphtholverbindung 24 Teile 2-Amino-6-sulfo-8-naphthol und führt die Umsetzung mit dem Isocyanat bei einem pH-Wert von 6,5 durch. Man erhält die Verbindung der Formel

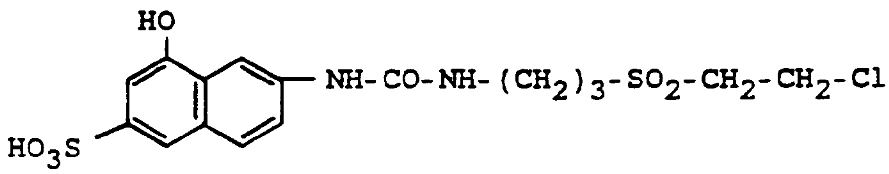

**Beispiel 1**

Man diazotiert 41 Teile 6-(β-Sulfatoethylsulfonyl)-1-sulfo-2-amino-naphthalin in üblicher Weise und versetzt sodann die Diazoniumsalzlösung bei 0°C mit der Lösung der Verbindung des Beispiels C. Man stellt den pH-Wert langsam mittels einer wäßrigen Natriumcarbonatlösung auf 4,5, rührt mehrere Stunden zur Beendigung der Kupplungsreaktion und klärt die Syntheselösung in üblicher Weise, beispielsweise mittels Kieselgur und Filtration.

Die erfindungsgemäße Monoazoverbindung, die in Form der freien Säure der allgemeinen Formel

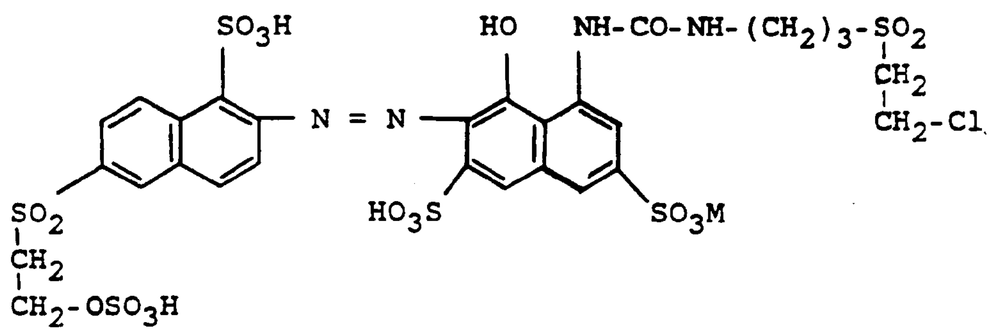

entspricht, wird mittels Natriumchlorid als Natriumsalz ausgesalzen und isoliert. Sie besitzt ein Absorptionsmaximum bei 534 nm und zeigt sehr gute faserreaktive Farbstoffeigenschaften. Auf den in der Beschreibung genannten Materialien, insbesondere Cellulosefasermaterialien, wie Baumwolle, liefert sie nach den für faserreaktive Farbstoffe üblichen Applikations- und Fixierverfahren leuchtend rote Färbungen und Drucke, die sich durch gute Echtheitseigenschaften, wie insbesondere durch eine hohe Chlorbadewasserechtheit, auszeichnen. Die mit ihr erhältlichen Färbungen und Drucke zeichnen sich durch eine hohe Farbstärke und durch einen hohen Fixierwert aus. Wegen ihrer guten Löslichkeit ist die erfindungsgemäße Monoazoverbindung besonders für das Klotz-Kurzverweil-Färbeverfahren geeignet.

**Beispiel 2**

Die Lösung der Verbindung des Beispiels C wird bei 25°C mittels einer 5 bis 15 %igen wäßrigen Natronlauge auf einen pH-Wert von 10,5 gestellt. Man hält diesen pH-Wert während drei Stunden mittels einer wäßrigen, 10 %igen Natriumcarbonatlösung, stellt anschließend mittels einer wäßrigen Salzsäurelösung den pH-Wert auf 4,5 und gibt zu dieser vinylsulfonylgruppenhaltigen Kupplungskomponente die in üblicher Weise hergestellte Diazoniumsalzlösung von 41 Teilen 6-(β-Sulfatoethylsulfonyl)-1-sulfo-2-aminonaphthalin. Die Kupplungsreaktion erfolgt gemäß den in Beispiel 1 angegebenen Bedingungen. Nach einer Klärfiltration wird die erfindungsgemäße Azoverbindung, die in Form der freien Säure geschrieben der Formel

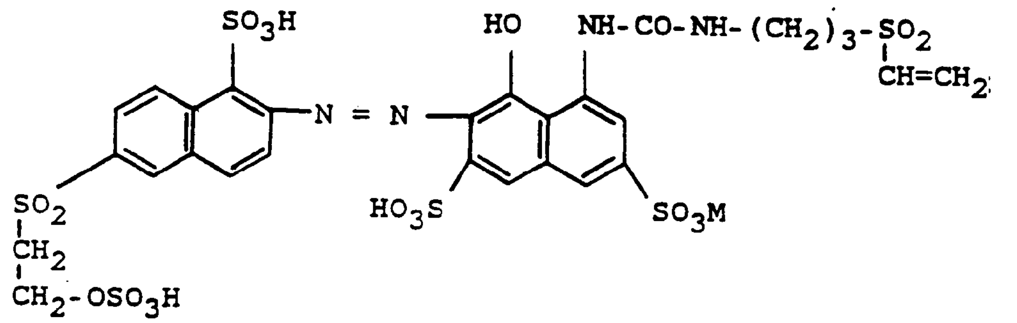

entspricht, als Natriumsalz mittels Natriumchlorid ausgesalzen und isoliert. Sie besitzt ein Absorptionsmaximum bei 534 nm, zeigt sehr gute faserreaktive Farbstoffeigenschaften und färbt ebenfalls die in der Beschreibung genannten Materialien, insbesondere Cellulosefasermaterialien, in leuchtend roten Tönen mit hoher Farbstärke und hohem Fixiergrad. Die Färbungen und Drucke zeichnen sich ebenfalls durch gute Echtheitseigenschaften, wie insbesondere eine hohe Chlorbadewasserechtheit, aus.

**Beispiel 3**

Zur Herstellung der erfindungsgemäßen β-Thiosulfatoethylsulfonyl-Verbindung der Azoverbindung des Beispiels 1 geht man von der geklärten Syntheselösung des Beispiels 1 aus, erwärmt sie auf 40°C, versetzt sie mit 16 Teilen Natriumthiosulfat und hält einen pH-Wert von 6,0 bis 6,5 während etwa vier Stunden aufrecht. Die synthetisierte erfindungsgemäße Azoverbindung, die in Form der freien Säure der Formel

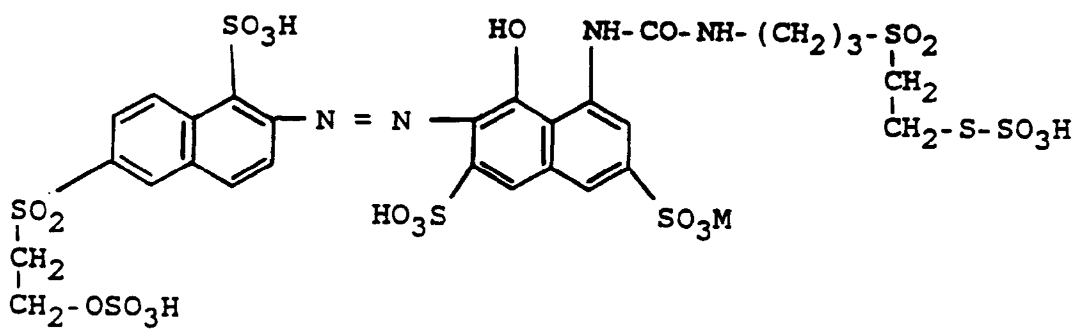

entspricht, wird analog der Verfahrensweise des Beispiels 1 als Natriumsalz isoliert. Sie besitzt ein Absorptionsmaximum bei 534 nm und zeigt dieselben guten Farbstoffeigenschaften wie die erfindungsgemäße Azoverbindung des Beispiels 1.

**Beispiel 4**

Man diazotiert 28 Teile 5-(β-Sulfatoethylsulfonyl)-2-methoxy-anilin in üblicher Weise, versetzt die Diazoniumsalzsuspension mit der Lösung der Kupplungskomponente des Beispiels D und führt die Kupplungsreaktion bei etwa 20°C und einem pH-Wert von 4,5 während mehrerer Stunden durch. Nach einer Klärfiltration und Ausfällung der erfindungsgemäßen Azoverbindung mittels Natriumchlorid wird die erfindungsgemäße Azoverbindung, die in Form der freien Säure der Formel

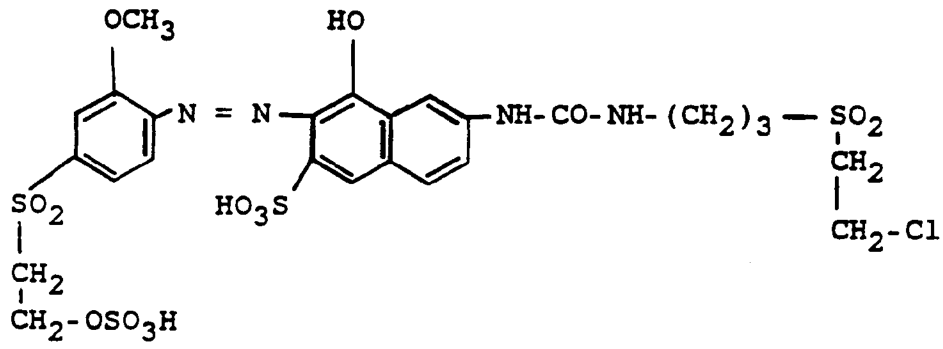

entspricht, als Natriumsalz isoliert. Sie zeigt ein Absorptionsmaximum bei 508 nm, besitzt sehr gute faserreaktive Farbstoffeigenschaften und färbt die in der Beschreibung genannten Materialien, wie insbesondere Cellulosefasermaterialien, beispielsweise Baumwolle mit gutem Farbaufbau, in farbstarken, braunroten Tönen. Die erfindungsgemäße Azoverbindung besitzt insbesondere im Auszieh-Färbeverfahren einen sehr hohen Fixiergrad, was zu einer sehr guten Erschöpfung des Färbebades führt.

**Beispiele 5 bis 14**

In den nachfolgenden Tabellenbeispielen sind weitere erfindungsgemäße Monoazoverbindungen mit Hilfe der allgemeinen Formel (A)

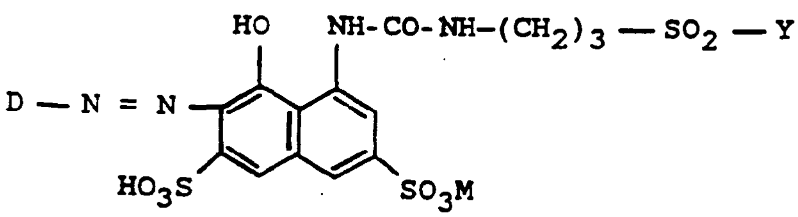

(A)

beschrieben. Sie lassen sich in erfindungsgemäßer Weise, bspw. analog den obigen Ausführungsbeispielen, herstellen. Sie besitzen sehr gute faserreaktive Farbstoffeigenschaften und färben die in der Beschreibung genannten Materialien, insbesondere Cellulosefasermaterialien, nach den bekannten Applikations- und Fixierverfahren in farbstarken, echten, für das jeweilige Tabellenbeispiel angegebenen Tönen.

Monoazoverbindung der Formel (A)

| Bsp. | Rest D | Rest Y | Farbton |
|---|---|---|---|
| 5 | 3-(β-Sulfatoethyl-sulfonyl)-phenyl | β-Chlorethyl | blaustichig rot (512) |
| 6 | dito | Vinyl | blaustichig rot (512) |
| 7 | dito | β-Thiosulfato-ethyl | blaustichig rot (512) |
| 8 | 3-(β-Sulfatoethyl-sulfonyl)-phenyl | β-Chlorethyl | blaustichig rot |
| 9 | dito | β-Thiosulfato-ethyl | blaustichig rot |
| 10 | 6-(β-Sulfatoethyl-sulfonyl)-naphth-2-yl | β-Chlorethyl | violett |
| 11 | 4-(β-Sulfatoethyl-sulfonyl)-2-sulfo-phenyl | dito | rot |
| 12 | 5-(β-Sulfatoethyl-sulfonyl)-2-methoxy-phenyl | dito | violett (515) |
| 13 | dito | Vinyl | violett (515) |
| 14 | dito | β-Thiosulfato-ethyl | violett (515) |

**Beispiele 15 bis 21**

In den nachfolgenden Tabellenbeispielen sind weitere erfindungsgemäße Monoazoverbindungen mit Hilfe der allgemeinen Formel (B)

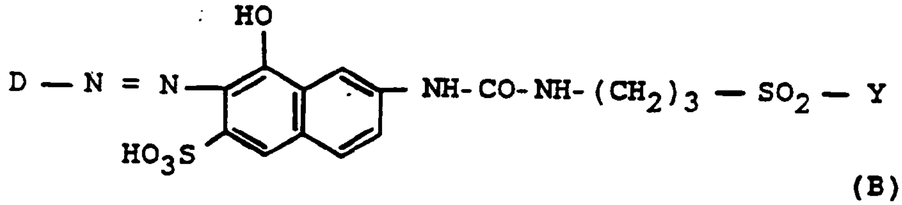

(B)

beschrieben. Sie lassen sich in erfindungsgemäßer Weise, bspw. analog den obigen Ausführungsbeispielen, herstellen. Sie besitzen sehr gute faserreaktive Farbstoffeigenschaften und färben die in der Beschreibung genannten Materialien, insbesondere Cellulosefasermaterialien, nach den bekannten Applikations- und Fixierverfahren in farbstarken, echten, für das jeweilige Tabellenbeispiel angegebenen Tönen.

Monoazoverbindung der Formel (B)

| Bsp. | Rest D | Rest Y | Farbton |
|---|---|---|---|
| 15 | 5-(ß-Sulfatoethyl-sulfonyl)-2-methoxy-phenyl | Vinyl | braunrot |
| 16 | dito | ß-Thiosulfato-ethyl | braunrot |
| 17 | 3-(ß-Sulfatoethyl-sulfonyl)-phenyl | ß-Chlorethyl | orange |
| 18 | dito | ß-Thiosulfato-ethyl | orange |
| 19 | 4-(ß-Sulfatoethyl-sulfonyl)-phenyl | ß-Chlorethyl | orange |
| 20 | 6-(ß-Sulfatoethyl-sulfonyl)-1-sulfo-naphth-2-yl | ß-Chlorethyl | gelbstichig rot |
| 21 | dito | ß-Thiosulfato-ethyl | gelbstichig rot |

**Beispiel 22**

Man diazotiert 28 Teile 4-(ß-Sulfatoethylsulfonyl)-anilin in üblicher Weise, stellt den pH-Wert der Diazoniumsalzsuspension auf 2,2 und versetzt sie mit der Lösung der Kupplungskomponente des Beispiels B. Man rührt den Ansatz noch mehrere Stunden bis zur Beendigung der Kupplungsreaktion bei etwa 20°C weiter und klärt die Lösung sodann bei etwa 40°C, stellt einen pH-Wert von 4,5 ein und isoliert die erfindungsgemäße Monoazoverbindung, die in Form der freien Säure der Formel

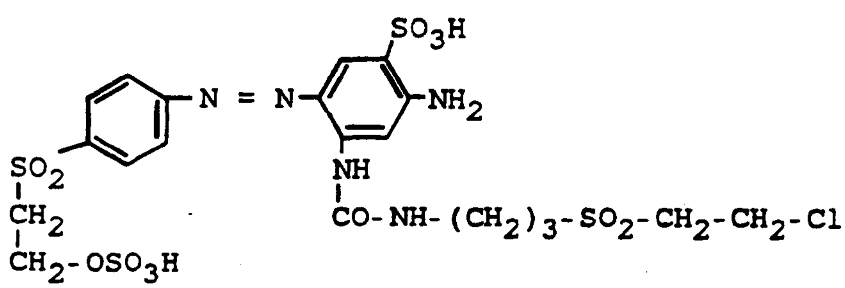

(B)

entspricht, als Alkalimetallsalz (Natriumsalz) in Form eines elektrolythaltigen Pulvers durch Sprühtrocknung oder durch Eindampfen der Lösung unter reduziertem Druck bei etwa 60°C. Die erfindungsgemäße Azoverbindung hat ein Absorptionsmaximum bei 413 nm, besitzt sehr gute faserreaktive Farbstoffeigenschaften und liefert auf den in der Beschreibung genannten Materialien, wie insbesondere Cellulosefasermaterialien, nach den für faserreaktive Farbstoffe üblichen Applikations- und Fixierverfahren farbstarke, goldorange Färbungen und Drucke. Sie zeichnet sich weiterhin durch einen hohen Fixiergrad aus und läßt sich sowohl im Ausziehals auch im Klotz-Kurzverweil-Färbeverfahren mit sehr gutem Erfolg anwenden.

**Beispiele 23 bis 30**

In den nachfolgenden Tabellenbeispielen sind weitere erfindungsgemäße Monoazoverbindungen mit Hilfe der allgemeinen Formel (C)

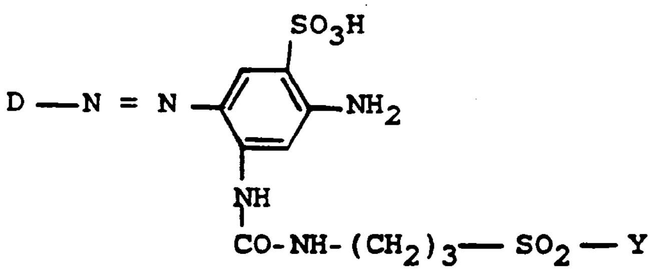

(C)

beschrieben. Sie lassen sich in erfindungsgemäßer Weise, bspw. analog dem Beispiel 22, herstellen. Sie besitzen sehr gute faserreaktive Farbstoffeigenschaften und färben die in der Beschreibung genannten Materialien, insbesondere Cellulosefasermaterialien, nach den bekannten Applikations- und Fixierverfahren in farbstarken, echten, für das jeweilige Tabellenbeispiel angegebenen Tönen.

Monoazoverbindung der Formel (C)

| Bsp. | Rest D | Rest Y | Farbton |
|---|---|---|---|
| 23 | 3-(ß-Sulfatoethylsulfonyl)-phenyl | ß-Chlorethyl | gelb |
| 24 | 5-(ß-Chlorethylsulfonyl)-2-methoxyphenyl | ß-Chlorethyl | goldgelb |
| 25 | 6-(ß-Sulfatoethylsulfonyl)-1-sulfonaphth-2-yl | ß-Chlorethyl | rotstichig gelb |
| 26 | dito | ß-Thiosulfatoethyl | rotstichig gelb |
| 27 | 6-(ß-Sulfatoethylsulfonyl)-8-sulfonaphth-2-yl | ß-Chlorethyl | rotstichig gelb |
| 28 | 4-(ß-Sulfatoethylsulfonyl)-phenyl | Vinyl | goldorange (413) |
| 29 | dito | ß-Thiosulfatoethyl | goldorange (413) |
| 30 | 5-(ß-Sulfatoethylsulfonyl)-2-methoxyphenyl | ß-Chlorethyl | goldgelb |

**Patentansprüche**

1. Monoazoverbindung entsprechend der allgemeinen Formel (1)

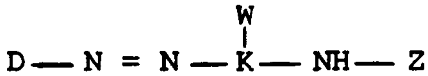

(1)

in welcher bedeuten:

D ist Phenyl, das durch eine Gruppe der allgemeinen Formel $Y^1$-$SO_2$- mit $Y^1$ der nachstehend angegebenen Bedeutung substituiert ist und durch 1 oder 2 Substituenten substituiert sein kann, die aus der Gruppe: 2 Alkyl von 1 bis 4 C-Atomen, 2 Alkoxy von 1 bis 4 C-Atomen, 1 Carboxy, 1 Sulfo, 1 Hydroxy, 1 Chlor und 1 Brom ausgewählt sind, oder ist ein Naphthyl, bevorzugt Naphth-2-yl, das durch 1 oder 2 Gruppen der allgemeinen Formel $Y^1$-$SO_2$- mit $Y^1$ der nachstehend angegebenen Bedeutung substituiert ist und durch 1 oder 2 Sulfogruppen substituiert sein kann;

$Y^1$ ist Vinyl oder ist Ethyl, das in ß-Stellung einen Substituenten enthält, der durch Alkali unter Bildung der Vinylgruppe eliminierbar ist;

W ist Amino oder Hydroxy,

-K(-W)- ist der bivalente Rest einer hydroxy- oder aminogruppenhaltigen Kupplungskomponente der Benzol- oder Naphthalinreihe;

Z ist eine Gruppe der allgemeinen Formel

$$-CO-NH-(CH_2)_3-SO_2-Y$$

in welcher

Y eine der für $Y^1$ angebenen Bedeutungen hat und mit $Y^1$ identisch oder von $Y^1$ verschieden sein kann.

2. Monoazoverbindung nach Anspruch 1, dadurch gekennzeichnet, daß -K(-W)- der bivalente Rest eines gegebenenfalls substituierten und 1 oder 2 Sulfogruppen enthaltenden Aminonaphthols oder Anilins ist.

3. Monoazoverbindung nach Anspruch 1 oder 2, dadurch gekennzeichnet, daß D ein Rest der allgemeinen Formel (2a) oder (2b)

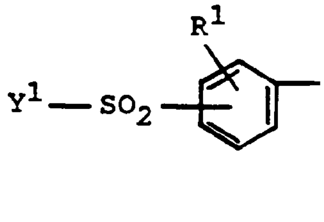

(2a)

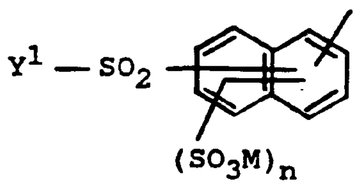

(2b)

ist, in welchen bedeuten:

$Y^1$ ist Vinyl oder ist Ethyl, das in ß-Stellung einen Substituenten enthält, der durch Alkali unter Bildung der Vinylgruppe eliminierbar ist;

$R^1$ ist Wasserstoff, Alkyl von 1 bis 4 C-Atomen, Alkoxy von 1 bis 4 C-Atomen, Hydroxy oder Sulfo;

M ist Wasserstoff oder ein Alkalimetall;

n ist die Zahl Null, 1 oder 2 (wobei im Fall von n gleich Null diese Gruppe Wasserstoff bedeutet).

4. Monoazoverbindung nach Anspruch 1 oder 3, dadurch gekennzeichnet, daß der Rest -K(-W)-NH-Z ein Rest der allgemeinen Formel (3a),

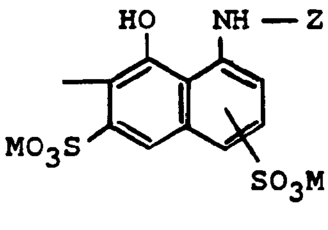

(3a)

ist, in welcher M und Z eine der oben angegebenen Bedeutungen besitzen und die eine Gruppe -$SO_3$M in meta- oder para-Stellung zur Gruppe -NH-Z steht.

5. Monoazoverbindung nach Anspruch 1 oder 3, dadurch gekennzeichnet, daß der Rest -K(-W)-NH-Z ein Rest der allgemeinen Formel (3b)

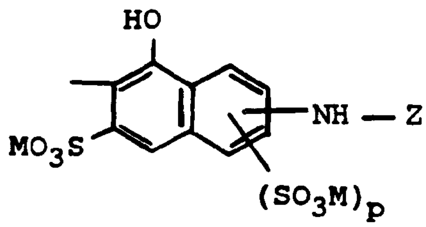

(3b)

ist, in welcher

M und Z eine der oben angegebenen Bedeutungen besitzen, die Gruppe -NH-Z in 2-, 3- oder 4-Stellung, bevorzugt in 2- oder 3-Stellung, des 8-Naphthol-Restes steht und

p die Zahl Null oder 1 ist (wobei im Fall von p gleich Null diese Gruppe Wasserstoff bedeutet).

**6.** Monoazoverbindung nach Anspruch 1 oder 3, dadurch gekennzeichnet, daß der Rest -K(-W)-NH-Z ein Rest der allgemeinen Formel (3c)

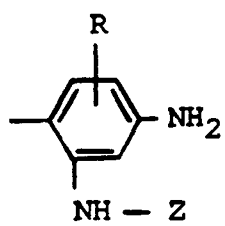

(3c)

ist, in welcher Z eine der oben angegebenen Bedeutungen besitzt und R Wasserstoff, Sulfo, Alkyl von 1 bis 4 C-Atomen, Alkoxy von 1 bis 4 C-Atomen oder Carboxy ist.

**7.** Monoazoverbindung nach Anspruch 6, dadurch gekennzeichnet, daß R gleich Alkyl von 1 bis 4 C-Atomen oder Sulfo ist und in para-Stellung zur Gruppe -NH-Z an den Benzolkern gebunden ist.

**8.** Monoazoverbindung nach mindestens einem der Ansprüche 1 bis 7, dadurch gekennzeichnet, daß Y Vinyl, ß-Chlorethyl, ß-Thiosulfatoethyl oder ß-Sulfatoethyl ist.

**9.** Monoazoverbindung nach mindestens einem der Ansprüche 1 bis 8, dadurch gekennzeichnet, daß $Y^1$ die β-Sulfatoethyl-Gruppe ist.

**10.** Verfahren zur Herstellung einer Monoazoverbindung der allgemeinen Formeo (1) von Anspruch 1, dadurch gekennzeichnet, daß man das Diazoniumsalz eines aromatischen Amins der allgemeinen Formel $D-NH_2$ mit D der in der Anspruch 1 genannten Bedeutung mit einer Verbindung der allgemeinen Formel (4)

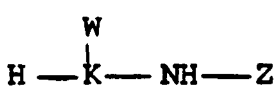

(4)

in welcher K, W und Z die in Anspruch 1 genannten Bedeutungen haben, kuppelt.

**11.** Verwendung eines Farbstoffes von mindestens einem der Ansprüche 1 bis 10 zum Färben und Bedrucken von hydroxy- und/oder carbonamidgruppenhaltigem Material, insbesondere Fasermaterial.

**12.** Verfahren zum Färben und Bedrucken von hydroxy- und/oder carbonamidgruppenhaltigem Material, vorzugsweise Fasermaterial, bei welchem man einen Farbstoff auf das Material aufbringt oder in das Material

einbringt und den Farbstoff auf oder in dem Material mittels Wärme oder mit Hilfe eines alkalisch wirkenden Mittels oder mittels Wärme und mit Hilfe eines alkalischen Mittels fixiert, dadurch gekennzeichnet, daß man als Farbstoff einen Farbstoff von mindestens einem der Ansprüche 1 bis 10 verwendet.

## Claims

1. A monoazo compound conforming to the formula (1)

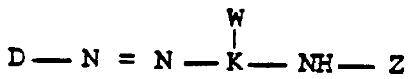

(1)

where

D is phenyl which is substituted by a group of the formula $Y^1$-$SO_2$-, where $Y^1$ has the below-specified meanings, and may be substituted by 1 or 2 substituents selected from the group consisting of 2 alkyl of 1 to 4 carbon atoms, 2 alkoxy of 1 to 4 carbon atoms, 1 carboxyl, 1 sulfo, 1 hydroxyl, 1 chlorine and 1 bromine, or is naphthyl, preferably 2-naphthyl, which is substituted by 1 or 2 groups of the formula $Y^1$-$SO_2$-, where $Y^1$ has the below-specified meanings, and may be substituted by 1 or 2 sulfo groups;

$Y^1$ is vinyl or is ethyl which contains in the β-position a substituent which is alkali-eliminable with formation of a vinyl group;

W is amino or hydroxyl;

-K(-W)- is the bivalent radical of a hydroxyl- or amino-containing coupling component of the benzene or naphthalene series;

Z is a group of the formula

$$-CO-NH-(CH_2)_3-SO_2-Y$$

where

Y has one of the meanings of $Y^1$ and can be identical to or different from $Y^1$.

2. A monoazo compound as claimed in claim 1, wherein -K(-W)- is the bivalent radical of a substituted or unsubstituted sulfo-monosubstituted or -disubstituted aminonaphthol or aniline.

3. A monoazo compound as claimed in claim 1 or 2, wherein D is a radical of the formula (2a) or (2b)

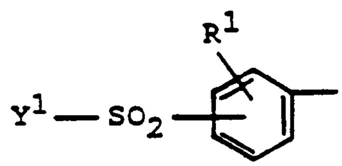

(2a)

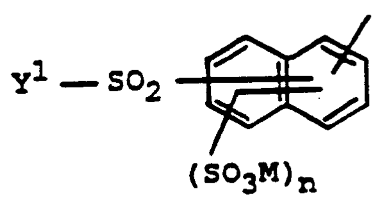

(2b)

where

$Y^1$ is vinyl or is ethyl which contains in the β-position a substituent which is alkali-eliminable with formation of a vinyl group;

$R^1$ is hydrogen, alkyl of 1 to 4 carbon atoms, alkoxy of 1 to 4 carbon atoms, hydroxyl or sulfo,

M is hydrogen or an alkali metal, and

n is zero, 1 or 2 (if zero, this group being hydrogen).

4. A monoazo compound as claimed in claim 1 or 3, wherein the radical -K(-W)-NH-Z is a radical of the formula (3a)

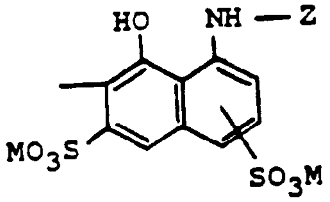

(3a)

where M and Z are each as defined above and the other $-SO_3M$ group is meta or para to the -NH-Z group.

5. A monoazo compound as claimed in claim 1 or 3, wherein the radical -K(-W)-NH-Z is a radical of the formula (3b)

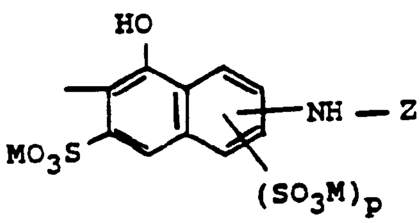

(3b)

where

M and Z are each as defined above, the -NH-Z group is in the 2-, 3- or 4-position, preferably the 2- or 3-position, of the 8-naphthol radical, and

p is zero or 1 (if zero, this group being hydrogen).

6. A monoazo compound as claimed in claim 1 or 3, wherein the radical -K(-W)-NH-Z is a radical of the formula (3c)

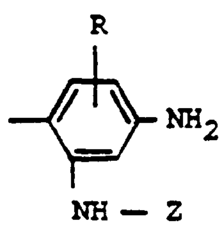

(3c)

where Z is as defined above and R is hydrogen, sulfo, alkyl of 1 to 4 carbon atoms, alkoxy of 1 to 4 carbon atoms or carboxyl.

7. A monoazo compound as claimed in claim 6, wherein R is alkyl of 1 to 4 carbon atoms or sulfo and is bonded to the benzene nucleus para to the -NH-Z group.

8. A monoazo compound as claimed in at least one of claims 1 to 7, wherein Y is vinyl, β-chloroethyl, β-thiosulfatoethyl or β-sulfatoethyl.

9. A monoazo compound as claimed in at least one of claims 1 to 8, wherein $Y^1$ is β-sulfatoethyl.

10. A process for preparing a monoazo compound of the formula (1) of claim 1, which comprises coupling the diazonium salt of an aromatic amine of the formula $D-NH_2$, where D is as defined in claim 1, to a compound of the formula (4)

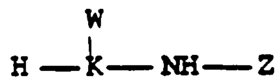

(4)

where K, W and Z are each as defined in claim 1.

**11.** The use of a dye of at least one of claims 1 to 10 for dyeing and printing hydroxyl- and/or carboxamido-containing material, in particular fiber material.

**12.** A process for dyeing and printing hydroxyl- and/or carboxamido-containing material, preferably fiber material, in which a dye is applied to or introduced into the material and fixed thereon or therein by means of heat or with the aid of an alkaline agent or by means of heat and with the aid of an alkaline agent, which comprises using a dye of at least one of claims 1 to 10.

## Revendications

**1.** Composé monoazoïque répondant à la formule générale (1) :

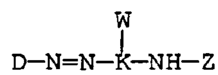

(1)

dans laquelle les symboles ont les significations suivantes :

| | |
|---|---|
| D | est un phényle qui est substitué par un groupe de formule générale $Y^1$-$SO_2$- avec $Y^1$ ayant la signification donnée ci-après et qui peut être substitué par 1 ou 2 substituants pris dans le groupe : 2 alkyle avec 1 à 4 atomes de C, 2 alcoxy avec 1 à 4 atomes de C, 1 carboxy, 1 sulfo, 1 hydroxy, 1 chlore et 1 brome, ou est un naphtyle, de préférence le napht-2-yle, qui est substitué par 1 ou 2 groupes de formule générale $Y^1$-$SO_2$- avec $Y^1$ ayant la signification donnée ci-après, et qui peut être substitué par un ou deux groupes sulfo ; |
| $Y^1$ | est le vinyle ou l'éthyle qui comporte en position β un substituant éliminable par un alcali avec formation du groupe vinyle ; |
| W | est un amino ou un hydroxy ; |
| -K(-W)- | est le radical bivalent d'un composant de copulation contenant des groupes amino ou hydroxy, de la série du benzène ou du naphtalène ; |
| Z | est un groupe de formule générale : $-CO-NH-(CH_2)_3-SO_2-Y$ dans laquelle |
| Y | a l'une des significations données pour $Y^1$ et peut être identique à $Y^1$ ou différent de $Y^1$. |

**2.** Composé monoazoïque selon la revendication 1 caractérisé en ce que -K(-W)- est le radical bivalent d'une aniline ou d'un aminonaphtol, le cas échéant substitué et comportant un ou deux groupes sulfo.

**3.** Composé monoazoïque selon la revendication 1 ou 2 caractérisé en ce que D est un radical de formule générale (2a) ou (2b) :

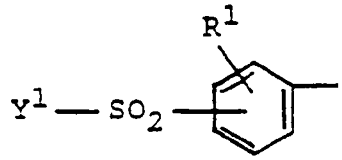

(2a)

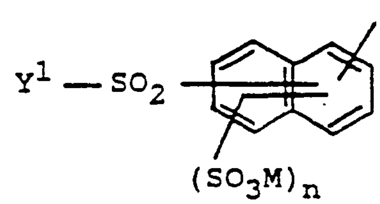

(2b)

dans lesquelles les ymboles ont les significations suivantes :

- $Y^1$ est le vinyle ou l'éthyle, lequel comporte en position β un substituant éliminable par un alcali avec formation du groupe vinyle ;
- $R^1$ est l'hydrogène, un alkyle avec 1 à 4 atomes de C, un alcoxy avec 1 à 4 atomes de C, un hydroxy ou un sulfo ;
- M est l'hydrogène ou un métal alcalin ;
- n est le nombre zéro, 1 ou 2 (dans le cas où n est égal à zéro, ce groupe signifie alors l'hydrogène).

**4.** Composé monoazoïque selon la revendication 1 ou 3 caractérisé en ce que le radical -K(-W)-NH-Z est un radical de formule générale (3a)

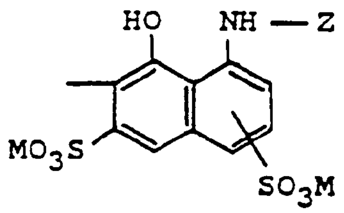

(3a)

dans laquelle M et Z ont l'une des significations données ci-dessus et l'un des groupes $-SO_3M$ est en position méta ou para par rapport au groupe -NH-Z.

**5.** Composé monoazoïque selon la revendication 1 ou 3 caractérisé en ce que le radical -K(-W)-NH-Z est un radical de formule générale (3b)

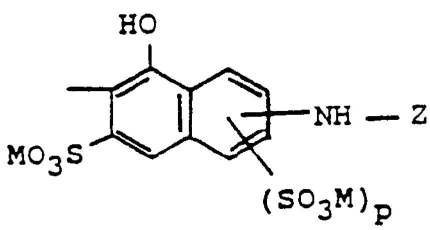

(3b)

dans laquelle

- M et Z ont la signification donnée ci-dessus, le groupe -NH-Z est en position 2, 3 ou 4, de préférence en position 2 ou 3, du radical 8-naphtol et
- p est le nombre zéro ou 1 (dans le cas où p est égal à zéro, ce groupe signifie alors l'hydrogène).

**6.** Composé monoazoïque selon la revendication 1 ou 3 caractérisé en ce que le radical -K(-W)-NH-Z est un radical de formule générale (3c)

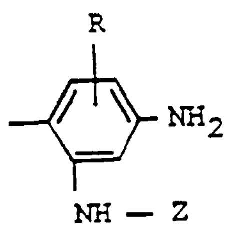

(3c)

dans laquelle Z a l'une des significations données ci-dessus et R est l'hydrogène, un sulfo, un alkyle avec 1 à 4 atomes de C, un alcoxy avec 1 à 4 atomes de C ou un carboxy.

**7.** Composé monoazoïque selon la revendication 6 caractérisé en ce que R est égal à un alkyle avec 1 à 4 atomes de C ou à un sulfo et est lié au noyau de benzène en position para par rapport au groupe -NH-Z.

**8.** Composé monoazoïque selon au moins l'une des revendications 1 à 7 caractérisé en ce que Y est le vinyle, le β-chloroéthyle, le β-thiosulfatoéthyle ou le β-sulfatoéthyle.

**9.** Composé monoazoïque selon au moins l'une des revendications 1 à 8 caractérisé en ce que $Y^1$ est le groupe β-sulfatoéthyle.

**10.** Procédé pour la préparation d'un composé monoazoïque de formule générale (1) de la revendication 1 caractérisé en ce qu'on copule le sel de diazonium d'une amine aromatique de formule générale $D\text{-}NH_2$ avec D ayant la signification mentionnée à la revendication 1, avec un composé de formule générale (4) :

$$H-\overset{\displaystyle W}{\overset{|}{K}}-NH-Z \qquad (4)$$

dans laquelle K, W et Z ont les significations mentionnées à la revendication 1.

**11.** Utilisation d'un colorant d'au moins l'une quelconque des revendications 1 à 10 pour la teinture et l'impression de matières contenant des groupes hydroxy et/ou carbonamido, surtout de matières fibreuses.

**12.** Procédé pour la teinture et l'impression de matières comportant des groupes hydroxy et/ou carboxamido, de préférence de matières fibreuses, selon lequel on dépose le colorant sur la matière ou on l'introduit dans la matière et on fixe le colorant sur ou dans le matière par la chaleur ou à l'aide d'un agent à action alcaline, caractérisé en ce qu'on utilise en tant que colorant un colorant d'au moins l'une des revendications 1 à 10.